Europäisches Patentamt

European Patent Office

Office européen des brevets

(11) Veröffentlichungsnummer: **0 323 833 B1**

(12) **EUROPÄISCHE PATENTSCHRIFT**

(45) Veröffentlichungstag der Patentschrift: **04.11.92**

(21) Anmeldenummer: **89100065.5**

(22) Anmeldetag: **04.01.89**

(51) Int. Cl.⁵: **A01F 12/44**

(54) **Sieb- und Fördereinrichtung.**

(30) Priorität: **23.03.88 DE 3809762**
**08.01.88 DE 8800121 U**

(43) Veröffentlichungstag der Anmeldung:
**12.07.89 Patentblatt 89/28**

(45) Bekanntmachung des Hinweises auf die
Patenterteilung:
**04.11.92 Patentblatt 92/45**

(84) Benannte Vertragsstaaten:
**BE DE FR GB IT**

(56) Entgegenhaltungen:
**EP-A- 0 144 292        DE-A- 2 011 413**
**DE-A- 2 632 560        FR-A- 2 161 137**
**FR-A- 2 216 900        GB-A- 2 146 218**
**US-A- 2 189 706        US-A- 2 310 610**
**US-A- 2 500 448        US-A- 2 732 941**
**US-A- 2 831 577        US-A- 2 854 138**
**US-A- 3 581 746**

**SOVIET INVENTIONS ILLUSTRATED, Woche
8517, Juni 1985, Nr. 85-104121/17, Derwent
Publications Ltd, London, GB; & SU-A-11 19
630 (ARBUZOV) 23-10-1984**

(73) Patentinhaber: **Huning-Wesseler, Walter**
**Klippenbusch 20**
**W-4520 Melle 9(DE)**

(72) Erfinder: **Huning-Wesseler, Walter**
**Klippenbusch 20**
**W-4520 Melle 9(DE)**

(74) Vertreter: **Busse & Busse Patentanwälte**
**Postfach 1226 Grosshandelsring 6**
**W-4500 Osnabrück(DE)**

## Beschreibung

Die Erfindung bezieht sich auf eine Sieb- und Fördereinrichtung für vorzugsweise selbstfahrende Mähdrescher in einer Ausbildung gemäß dem Oberbegriff des Anspruchs 1.

Bei einer bekannten Sieb- und Fördereinrichtung dieser Art mit einem aus einem Ober- und einem Untersieb bestehenden Siebkörper sind die Siebflächen mit jeweils gutförderrichtungsparallelen Stromführungen besetzt (DE-A-20 11 413). Um beim Hangdrusch einem Anhäufen des Siebgutes entlang der geneigten Siebkastenseitenbegrenzung vorzubeugen, sind an den gegenüberliegenden Seitenbegrenzungen jeweils hintereinander Leitbleche mit zur Siebkastenmitte hin ausgerichteter Längsmittelachse vorgesehen, wobei der Neigungswinkel zwischen den Leitblechen und der jeweiligen seitlichen Begrenzung durch Verschwenken des Bleches geringfügig geändert werden kann. Eine wirksame Vergleichmäßigung der Siebgutverteilung können diese Leitbleche jedoch nicht bewirken, da das Siebgut nach Passieren der jeweiligen Bleche direkt wieder auf die tief gelegene Seitenbegrenzung fällt und die Leitbleche in den jeweils nur äußeren, durch Stromführungen begrenzten Siebabschnitten Wirkung entfalten. Eine Zuführung von Siebgut in z. B. auch mittlere Siebflächenbereiche ist in nennenswertem Maße nicht zu erreichen.

Zur Vergleichmäßigung der Siebgutverteilung bei einer Erntefahrt in Hanglagen ist es darüber hinaus bekannt (DE-A-33 32 763), die Schwingungs- und Förderrichtung des Siebkastens in Abhängigkeit der Seitenneigung der Förder- und Siebeinrichtung zu verändern und den Siebkasten mit einer quer zu seiner Längsmittelachse ausgerichteten Bewegungskomponente hin- und herschwingen zu lassen. Dazu sind Schwenkhebel und dgl. Antriebs- und Kraftübertragungsteile vorgesehen, die mittels einer Steuereinheit mit einer hydraulischen Drucksteuerung, einem ortsfest am Mähdreschergehäuse schwenkbeweglich gehaltenen Behälter sowie einem Pendel hydraulisch betätigbar sind. Trotz des nicht unerheblichen Bauaufwandes ist jedoch auch diese Sieb- und Fördereinrichtung in der Regel nicht in der Lage, das Siebgut derart auf der Siebgutfläche zu verteilen, daß beim Hangdrusch Betriebsergebnisse zu erzielen sind, die annähernd mit dem Arbeitsergebnis bei Erntefahrt auf ebenen Flächen zu vergleichen sind. Insbesondere bei grobkernigem Erntegut, beispielsweise Mais, Bohnen und dgl., kann infolge der überlagerten Schwingbewegungen das Siebgut über den Siebkasten hinweggeschleudert werden.

Es besteht darüberhinaus als einschlägiger Stand der Technik die EP-A-323833 gemäß Art. 54(3) EPÜ. Dieser Stand der Technik ist für die Frage der erfinderischen Tätigkeit nicht von Bedeutung.

Es ist Aufgabe der vorliegenden Erfindung, eine Sieb- und Fördereinrichtung der eingangs genannten Art zu schaffen, mit der in baulich einfacher Weise eine wirksame Vergleichmäßigung der Siebgutverteilung beim Hangdrusch zu erreichen ist.

Ausgehend von einer Sieb- und Fördereinrichtung der eingangs genannten Art löst die Erfindung diese Aufgabe durch die im kennzeichnenden Teil des Anspruchs 1 angegebenen Merkmale. Hinsichtlich wesentlicher weiterer Ausgestaltungsmerkmale wird auf die Ansprüche 2 bis 12 verwiesen.

Durch die je nach Seitenneigung der Sieb- und Fördereinrichtung bzw. des Mähdreschers in die eine oder die andere Richtung verschwenkbaren Leitbleche ist der Erntegutstrom bzw. ein entsprechender Anteil des Erntegutstromes wirksam auf höher gelegene Förderboden bzw. Siebkörperbereiche zu leiten und kann dort an die zweckmäßigerweise auf dem Förderboden bzw. der Siebfläche vorgesehenen, durch geradlinige Stromführungen begrenzte Gutförderräume übergeben werden, so daß der Förder- bzw. Vorbereitungsboden schon im vorderen Bereich Wirkung entfaltet. Insgesamt ist die Siebfläche beim Hangdrusch annähernd ohne Siebflächenverlust wirksam. Die verschwenkbaren Leitbleche sind verschleißarme, kostengünstige Bauteile, die mit einem nur geringen Aufwand auch bei herkömmlichen Sieb- und Fördereinrichtungen nachgerüstet werden können, so z. B. auch bei Einrichtungen der genannten Art, bei denen die Schwingungsrichtung des Siebkastens geändert werden kann. Insbesondere in Kombination mit einem Siebkasten, der in bekannter Weise überlagerte Schwingbewegungen beim Hangdrusch ausführt, lassen sich optimale Arbeitsergebnisse erzielen, ohen daß befürchtet werden muß, daß auch grobkörniges Erntegut über den Siebkasten hinausgeschleudert wird. Hiebei ist in vorteilhafter Weise durch Vorsehen eines weiteren hydraulischen Stellgliedes an der Steuereinheit zur Änderung der Schwingungsrichtung die Betätigungseinrichtung für die Leitbleche anzuordnen. Zweckmäßigerweise sind die verstellbaren Leitbleche in der Einzugszone bzw. dem Aufgabebereich der Einrichtung, z. B. im Gutaufgabebereich des Förderbodens, angeordnet, können jedoch auch in Gruppen nacheinander mit z. B. überlappenden Endbereichen insbesondere bei Einrichtungen ohne zusätzliche gutförderrichtungsparallele Stromführungen vorgesehen sein.

Es ist zwar aus der US-A-2,189,706 bekannt, bei einer Sieb- und Fördereinrichtung eines Mähdreschers eine Zuführungsvorrichtung vorzusehen, die zum Boden hin geneigt und damit sozusagen als Rutsche ausgebildet ist, auf deren Oberseite parallel angeordnete und parallel verschwenkbare Leitbleche vorgesehen sind. Nach Verschwenken dieser Leitbleche während der Erntefahrt beim Hangdrusch ist damit zwar auf der Rutsche das Erntegut in höher gelegene Bereiche am Ende der Rutsche zu bringen, jedoch wird das Erntegut danach unmittelbar infolge der Schwerkraft wieder in die tiefstgelegenen Stellen fallen, so daß die verschwenkbaren Leitbleche zur Vergleichmäßigung des Erntegutes auf dem Siebkörper keinen wirksamen Beitrag zu leisten in der Lage sind.

Zur Optimierung der Vergleichmäßigung der Siebgutverteilung bei der Erntefahrt in Hanglagen bzw. des Übergabevorganges von den Leitflächen in die Stromführungen sind diese zweckmäßigerweise derart vorzusehen, daß zumindest die im mittleren Zentrallängsbereich der Einrichtung angeordneten Leitbleche in ihrer Ausgangsstellung bis nahezu an die durch die Stromführungsbegrenzungen definierten Stromführungen reichen, so daß damit auch die dann in ihrer Endstellung verschwenkten Leitbleche bis nahe an die Stromführungen reichen. Damit ist eine Überführung an die jeweils zugeordneten Stromführungen sichergestellt, wobei noch geringe Mengen des Erntegutes vorbei an den vorderen Enden der Leitbleche in eine benachbart angeordnete Stromführung gelangen kann. Zweckmäßig kann es auch sein, die Leitbleche mit einen gewissen Höhenabstand schwenkbeweglich festzulegen, so daß noch geringe Mengen des Erntegutes unterhalb des Bodens hindurchtreten können, um in benachbarte Stromführungen infolge der Neigung und der hin- und hergehenden Schwingbewegung zu gelangen.

Des weiteren kann es zweckmäßig sein, den Abstand der Leitbleche vom mittleren Zentrallängsbereich bis zu den jeweiligen Seitenbegrenzungen derart zu variieren, daß der Abstand größer wird, sei es durch eine entsprechen kürzere Ausbildung von Leitblechen oder der Stromführungsbegrenzungen, so daß von dem z. B. im Zentrallängsmittelbereich gelegenen verschwenkten Leitblech geführtes Gut nicht sämtlich an die zugeordnete Stromführung übergeben wird, sondern noch ein gewisser Anteil aufgrund des vorgesehenen Lageabstandes in benachbarte Stromführungen gelangen kann. Um innerhalb der Stromführungen auch eine wirksame Ausnutzung der begrenzten Siebflächenbereiche zu haben, kann es darüber hinaus vorteilhaft sein, an den gegenüberliegenden Innenwänden Abweiser anzuordnen, so daß das Erntegut jeweils wieder eine Bewegung zu den höher gelegenen Bereichen erfährt.

Weitere Einzelheiten und Vorteile der Erfindung ergeben sich aus der Zeichnung sowie der nachfolgenden Beschreibung. In der Zeichnung zeigen:

Fig. 1 und 2     in schematischer Draufsicht Siebkörper und Förderboden eines Ausführungsbeispiels der Einrichtung mit jeweils verschwenkten Leitblechen;

Fig. 3     in schematischer Draufsicht Siebkörper sowie Förderboden mit schematischer Darstellung einer Anordnung zur Verschwenkung der Leitbleche;

Fig. 4     eine zu Fig. 3 analoge Darstellung mit Ansicht des Siebkörpers sowie der Förderbodens von unten;

Fig. 5     eine schematische Draufsicht auf Siebkörper und Förderboden einer alternativen Ausführungsform der Einrichtung;

Fig. 6 und 7     zu Fig. 1 und 2 analoge Darstellungen einer Einrichtung mit Sensoren zur Steuerung der Schwenkstellungen der Leitbleche und

Fig. 8 und 9     Darstellung der Erntegutverteilungen auf dem Förderboden bzw. Siebkörper bei der Erntefahrt eines Mähdreschers auf geneigten Flächen.

Die in der Zeichnung allgemein mit 1 bezifferte Sieb- und Fördereinrichtung hat einen Siebkörper 2 sowie einen in Förderrichtung des Erntegutes diesem vorgeordneten Förderboden 3. Im einzelnen nicht näher dargestellt kann der Siebkörper aus einem Obersieb und einem Untersieb bestehen und über einen geeigneten Antrieb in schwingende Bewegungen zu versetzen sein, so daß durch die Siebschüttelbewegung das Erntegut auf ein Führungsblech gelangen kann, von wo es dem Körnerelevator des Mähdreschers zugeführt und von dort in einen nicht veranschaulichten Korntank gelangen kann. Nicht ausgedroschene Ähren sollen vom Ende des Siebkörpers auf ein weiteres Führungsblech gelangen und in ein Überkehrsystem gefördert werden.

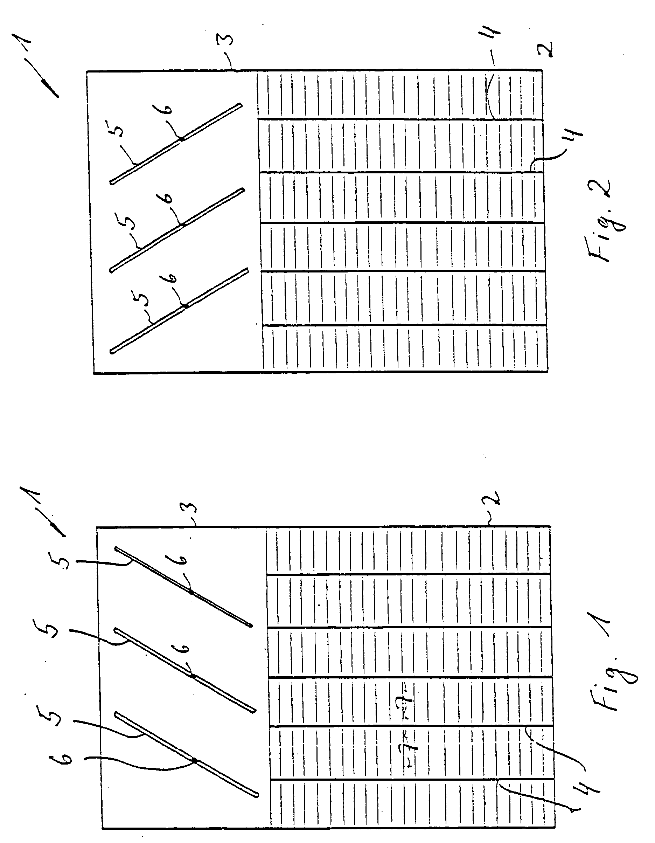

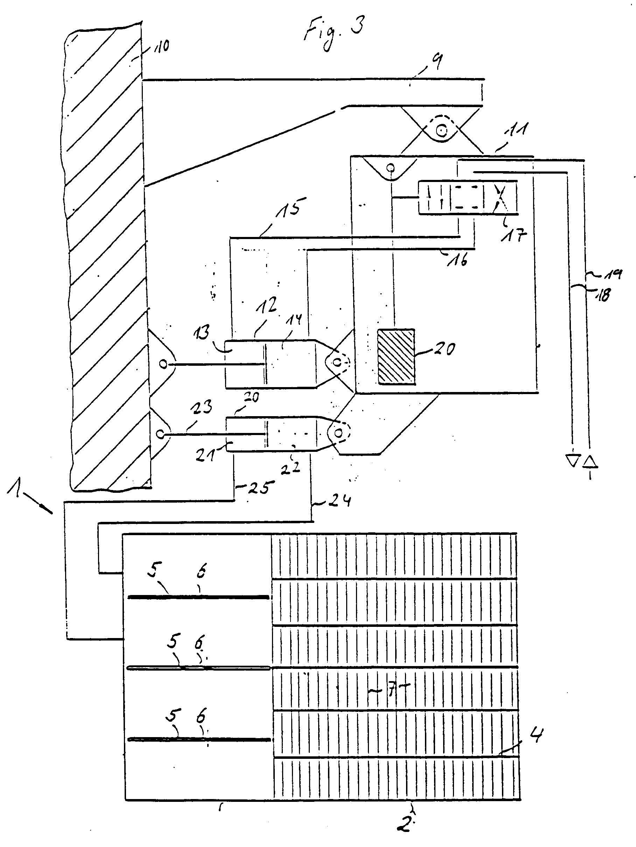

Der Siebkörper 2 ist bei dem veranschaulichten Ausführungsbeispiel nach den Fig. 1 und 2 mit geradlinigen, parallel zur Gutförderrichtung verlaufenden Stromführungsbegrenzungen 4 versehen. Auf dem Förderboden 3 sind Leitbleche 5 vorgesehen, die mit Abstand zu den jeweiligen Seitenbegrenzungen sowie mit Abstand voneinander parallel nebeneinander angeordnet sind und um senkrecht zum Förderboden ausgerichtete Achsen 6 sowohl in Richtung zur einen Seitenbegrenzung als auch zur anderen Seitenbegrenzung verschwenkt werden können. Die verschwenkbaren Leitbleche erstrecken sich in dem Ausführungsbeispiel nach Fig. 1 bzw. 2 entlang des Förderbodens 3 und verlaufen damit im Gutaufgabebereich der Einrichtung, so daß aufgegebenes Gut im wesentlichen direkt nach Auftreffen auf den Förderboden in dem jeweils gewünschten Maße durch entsprechende Einstellung der Leitbleche 5 erfaßt werden und automatisch in während der Hangfahrt höher gelegene Bereiche transportiert werden kann, um von dort an die durch die Stromführungsbegrenzungen 4 begrenzten Förder- bzw. Siebförderräume 7 übergeben werden zu können. In ihrer Ausgangsstellung (Fig. 3) sind die Leitbleche parallel zu den nachgeordneten Stromführungsbegrenzungen 4 angeordnet, wobei sich bei dem Ausführungsbeispiel mit drei verschwenkbaren Leitblechen das mittlere Leitblech 5 koaxial zu der mittleren Stromführung erstreckt.

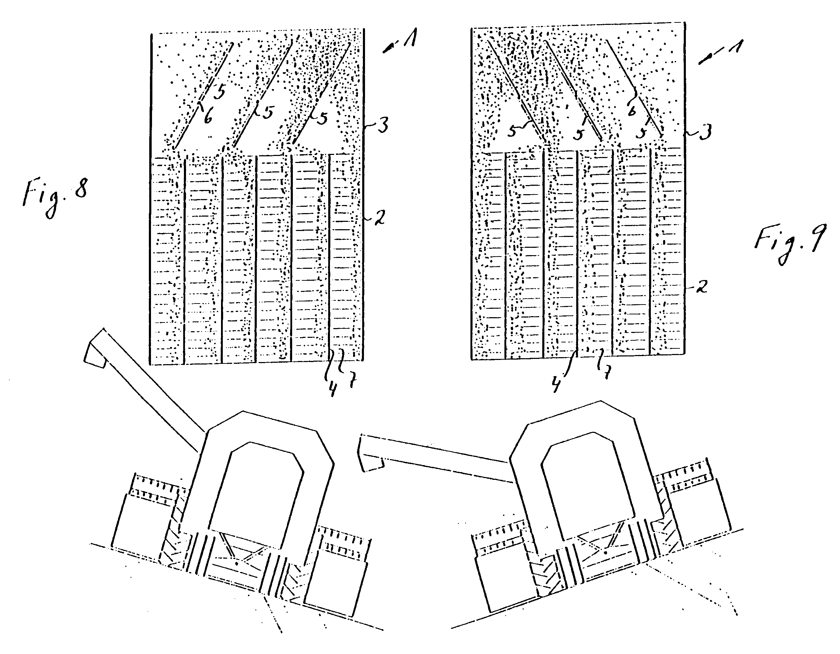

Die Leitbleche 5 haben insgesamt zumindest eine derartige Länge, daß sie gemeinsam in ihren jeweiligen Schwenkendstellungen in etwa von einer Seitenbegrenzung bis nahe an die gegenüberliegende Seitenbegrenzung reichen, so daß annähernd entlang der Gesamtbreite der Sieb- und Fördereinrichtung Erntegut zu erfassen ist. Je nach Breite der Sieb-und Fördereinrichtung oder sonstiger konstruktiver Gegebenheiten sind die Leitbleche in entsprechender Zahl nebeneinander vorzusehen. Für gängige Mähdrescherausführungen hat es sich als zweckmäßig herausgestellt, drei oder vier verschwenkbare Leitbleche nebeneinander anzuordnen. Sollen weniger, z. B. zwei Leitbleche vorgesehen werden, ist es zweckmäßig, die Schwenklager bzw. -achsen derart vorzusehen, daß die jeweilige Schwenkachse die Leitblechlängsmittelachse mit Versatz in Gutförderrichtung außermittig schneidet (Fig. 5).

Die Verstellung der Leitbleche kann motorisch oder in sonstiger geeigneter Weise erfolgen, wobei z. B. zur Verstellung entsprechend der Neigungslage Sensoren 8 und dgl. Meßwerterfasser zu automatischen Steuerung von Stellgliedern bzw. eines Stellmotors Verwendung finden können.

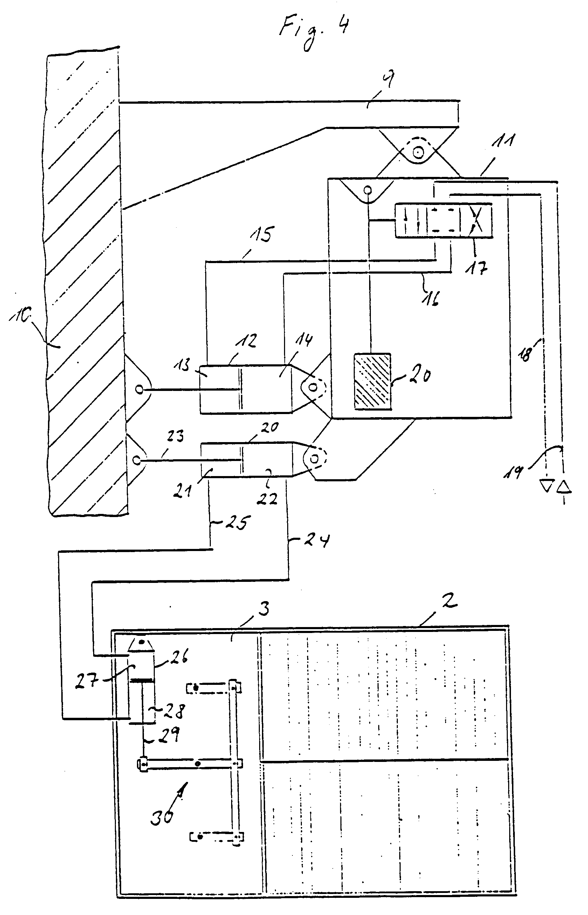

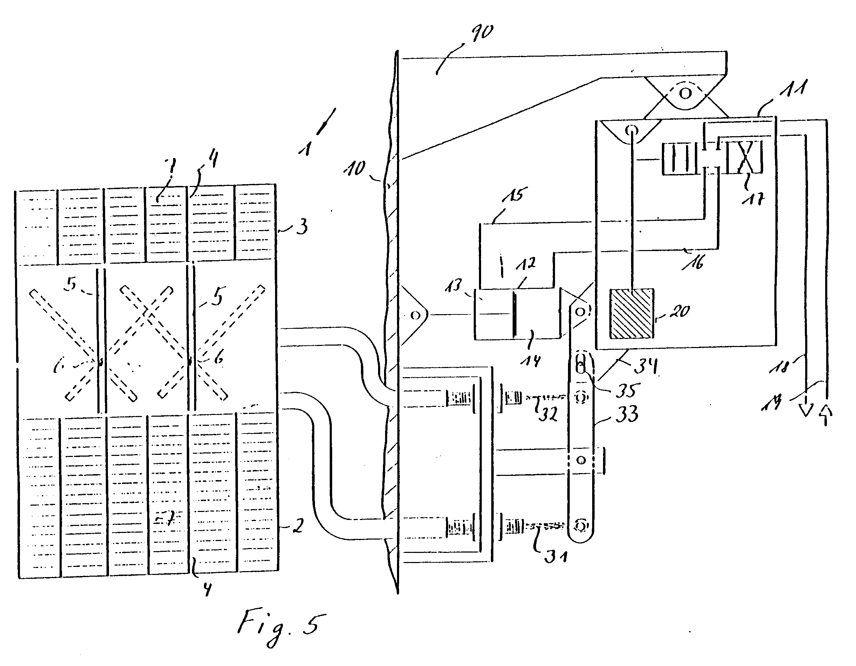

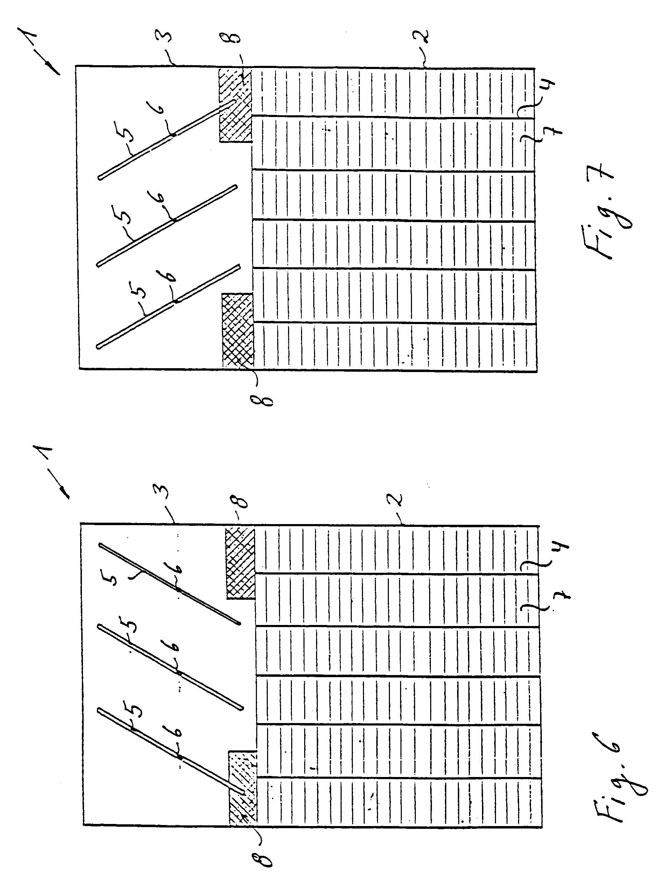

Insbesondere bei Einrichtungen, bei denen die Schwingungsrichtung des Siebkastens entsprechend der Neigungslage angepaßt werden kann, erfolgt die Verstellung der Leitbleche 5 über gemeinsame hydraulische Stellglieder, da hier in baulich äußerst einfacher Weise die bestehende Anordnung zur Schwingungsrichtungänderung so erweitert werden kann, daß sie auch die entsprechende Verschwenkung der Leitbleche 5 übernimmt (Fig. 3 und 4). Dazu ist ein schwenkbar an einem Tragarm 9, der seinerseits fest an einem Bauteil 10 des Mähdreschers befestigt ist, gehaltene Steuereinheit 11 vorgesehen, die in bekannter Weise über einen Zylinder 12 mit gegenüberliegenden Druckräumen 13, 14 an einem Mähdrescherbauteil 10 abgestützt ist. Die gegenüberliegenden Druckräume 13, 14 sind über Hydraulikleitungen 15, 16 von einem Regelventil 17 zu beaufschlagen, das über Leitungen 18, 19 mit einem nicht näher veranschaulichten Druckmittelvorratsbehälter verbunden ist. Innerhalb der Steuereinheit 11 ist ein Pendel 20 vorgesehen. Bei Relativbewegung des Pendels 20 zum Steuerkasten 11 bei entsprechender Neigungslage des Behälters bzw. des Mähdreschers wird das Regelventil 16 derart beaufschlagt, daß dieses die entsprechende Hydraulikleitung 16, 17 bzw. Druckräume 13, 14 so lange mit dem Druckmedium beaufschlagt, bis der Zylinder 12 den Behälter in eine parallele Lage zum Pendel 20 verschwenkt hat. Am unteren Ende des Steuerkastens 11 ist ein weiterer Zylinder 20 mit ebenfalls gegenüberliegenden Druckräumen 21 und 22 gehalten, dessen Kolbenstange 23 ebenfalls an dem Mähdrescherteil 10 befestigt ist. Es besteht auch die Möglichkeit, ein Steuerventil mit separater Hydraulik zwischenzuschalten bzw. vorzusehen. Über Hydraulikleitungen 24, 25 sind die gegenüberliegenden Druckräume 21 und 22 mit einem dritten, an der Unterseite des Förderbodens 3 vorgesehenen Zylinder 26 bzw. seinen gegenüberliegenden Druckräumen 27, 28 verbunden. Die Kolbenstange 29 des Zylinders 26 greift an einem insgesamt mit 30 bezeichneten Gestänge an, das ebenfalls unterhalb des Förderbodens und damit zum Erntegut hin zwecks Vermeidung von Verschmutzungen und Verstopfungen abgeschirmt angeordnet ist und mit dem die Leitbleche 5 verbunden sind. Durch den entsprechenden Druckmittelfluß aus einem der Druckräume 21 bzw. 22 des Zylinders 20 bei einer Ausfahrbewegung des Zylinders 12 wird der angeschlossene Druckraum 27 bzw. 28 unter Entlastung des anderen Druckraumes des Zylinders 26 beaufschlagt. Die damit einhergehende Ein- bzw. Ausfahrbewegung der Kolbenstange 29 bewirkt eine entsprechend lagegerechte Verstellung der mechanisch über das Gestänge 30 miteinander gekoppelten Leitbleche 5.

Bei dam Ausführungsbeispiel nach Fig. 5 sind in ansonsten analoger Ausbildung wie beim Ausführungsbeispiel nach den Fig. 3 und 4 nicht Zylinder 25 und 26 vorgesehen. Hier erfolgt die Verstellung der Leitbleche 5 bei einer Ausfahrbewegung des Zylinders 12 und Verschwenkung des Behälters 11 über Seilzüge 31 und 32, die einenends mit ebenfalls einem Gestänge zur Verstellung der Leitbleche und anderenends mit einem Hebel 33 verbunden sind. Der Hebel 33 ist an dem Halterungsteil 34 des Steuerkastens 11 in einer Langlochführung 35 befestigt. Die Fig. 8 und 9 veranschaulichen die Wirkungsweise der Leitbleche mit nachgeordneten geradlinigen Stromführungen beim Hangdrusch eines Mähdreschers. Das infolge der jeweiligen Seitenneigung des Mähdreschers in Fig. 8 verstärkt an der rechten und in Fig. 9 an der linken Seitenbegrenzung anfallende Erntegut wird von den Leitblechen 5 aus den tiefer gelegenen Bereichen jeweils anteilig im Einzugsbereich des Förderbodens erfaßt, so daß bei Erreichen des Siebkörpers in den durch die geradlinigen Strömungsführungen begrenzten Sieb- bzw. Förderräumen ein im wesentlichen gleichmäßig über die Siebfläche verteilter Erntegutstrom vorliegt.

**Patentansprüche**

1. Sieb- und Fördereinrichtung für vorzugsweise selbstfahrende Mähdrescher mit einem Förderboden (3), einem diesen nachgeordneten, hin- und herbeweglichen Siebkörper (2) sowie mit dem Siebkörper (2) und/oder dem Förderboden (3) zugeordneten Stromführungen zur Vergleichmäßigung der Siebgutverteilung beim Hangdrusch, die um im wesentlichen senkrecht zur Gutförderrichtung ausgerichtete Achsen verschwenkbare Leitbleche (5) sowie im wesentlichen geradlinige auf dem Siebkörper (2) fest angeordnete Stromführungsbegrenzungen (4) umfassen, **dadurch gekennzeichnet,** daß die Leitbleche (5) in Gutförderrichtung gesehen mit Abstand zur Seitenbegrenzung sowie mit Abstand voneinander parallel nebeneinander angeordnet und in Abhängigkeit der Seitenneigung der Sieb- und Fördereinrichtung (1) zur Horizontalen in parallele Schwenkstellungen überführbar sind, wobei zumindest im Zentralbereich des Förderbodens (3) angeordnete verschwenkbare Leitbleche (5) in ihrer Ausgangsstellung bis an eine zugeordnete Stromführungsbegrenzung (4) reichen.

2. Sieb- und Fördereinrichtung nach Anspruch 1, **dadurch gekennzeichnet,** daß verschwenkbare Leitbleche (5) mit einem Höhenabstand, gegenüber dem Förderboden (3) festgelegt sind.

3. Sieb- und Fördereinrichtung nach Anspruch 1 oder 2, **dadurch gekennzeichnet,** daß außerhalb des Längsmittelzentralbereiches des Siebkastens angeordnete Stromführungsbegrenzungen (4) und/oder Leitbleche (5) bezogen auf den Lageabstand zueinander kürzer ausgebildet sind.

4. Sieb- und Fördereinrichtung nach einem der Ansprüche 1 bis 3, **dadurch gekennzeichnet,** daß die verschwenkbaren Leitbleche (5) im Gutaufgabebereich des Förderbodens (3) vorgesehen sind.

5. Sieb- und Fördereinrichtung nach einem der Ansprüche 1 bis 4, **dadurch gekennzeichnet,** daß die verschwenkbaren Leitbleche (5) in ihren Ausgangsstellungen parallel zu vor- und/oder nachgeordneten Stromführungen ausgerichtet sind.

6. Sieb- und Fördereinrichtung nach Anspruch 5, **dadurch gekennzeichnet,** daß sich die verschwenkbaren Leitbleche (5) in ihrer Ausgangsstellung koaxial zu vor- und/oder nachgeordneten Stromführungen erstrecken.

7. Sieb- und Fördereinrichtung nach einem der Ansprüche 1 bis 6, **dadurch gekennzeichnet,** daß die nebeneinander angeordneten Leitbleche (5) zumindest eine derartige Länge haben, daß sie in ihren jeweiligen Schwenkendstellungen von einer Seitenbegrenzung der Einrichtung (1) bis an die gegenüberliegende Seitenbegrenzung reichen.

8. Sieb- und Fördereinrichtung nach einem der Ansprüche 1 bis 7, **dadurch gekennzeichnet,** daß die verschwenkbaren Leitbleche (5) jeweils eine Schwenkachse (6) haben, die die Leitblechlängsmittelachse mit Versatz in Gutförderrichtung außermittig schneidet.

9. Sieb- und Fördereinrichtung nach einem der Ansprüche 1 bis 8, **dadurch gekennzeichnet,** daß in Gutförderrichtung Gruppen von nebeneinander angeordneten verschwenkbaren Leitblechen (5) vorgesehen sind.

10. Sieb- und Fördereinrichtung nach einem der Ansprüche 1 bis 9, **dadurch gekennzeichnet,** daß die nebeneinander angeordneten Leitbleche (5) mechanisch gekoppelt und mittels eines gemeinsamen Stellgliedes (20,26,31,32) in ihre Schwenkstellungen überführbar sind.

11. Sieb- und Fördereinrichtung nach einem der Ansprüche 1 bis 10, **dadurch gekennzeichnet,** daß die Leitbleche (5) über ein hydraulisch betätigbares Stellglied (20,26) verschwenkbar sind.

12. Sieb- und Fördereinrichtung nach einem der Ansprüche 10 oder 11, **dadurch gekennzeichnet,** daß das Stellglied mittels einer ein Pendel (20) und/oder Sensoren (8) umfassenden Steuereinheit (11) betätigbar ist.

13. Sieb- und Fördereinrichtung nach einem der Ansprüche 1 bis 12, **dadurch gekennzeichnet,** daß die Schwingungsrichtung des Siebkörpers (3) in Abhängigkeit der Seitenneigung der Sieb- und Fördereinrichtung (1) über einen eine hydraulische Steuereinheit (11) mit einem an einem Tragrahmen (9,10) gehalterten, von einem Steuerzylinder (12) bewegbaren Schwenkkörper veränderbar ist und an dem Schwenkkörper ein Hydraulikzylinder (20) als Stellglied zur Betätigung der Leitbleche (5) angreift.

14. Sieb- und Fördereinrichtung nach einem der Ansprüche 1 bis 13, **dadurch gekennzeichnet,** daß die zur Verschwenkung der Leitbleche (5) vorgesehenen Gestell- und Lagerteile (30) gegenüber dem Sieb- und Fördergut abgeschirmt angeordnet sind.

15. Sieb- und Fördereinrichtung nach Anspruch 14, **dadurch gekennzeichnet,** daß die zur Verschwenkung der Leitbleche (5) vorgesehenen Stell- und Lagerteile (30) unterhalb des Förderbodens angeordnet sind.

16. Sieb- und Fördereinrichtung nach einem der Ansprüche 1 bis 15, **dadurch gekennzeichnet,** daß an den gegenüberliegenden Innenwänden der Stromführungsbegrenzungen (4) mit Abstand in Gutfördereinrichtung voneinander das Gut zur Stromführungsmitte hin leitende Abweiserelemente vorsehbar sind.

**Claims**

1. Sieving and conveying device for a preferably self-propelled combine harvester with a conveying platform (3), a sieving body (2) movable to and fro, mounted downstream of the platform, as well as flow guides associated with the sieving body (2) and/or the conveying platform (3) to even out the distribution of the sieved material when threshing on slopes, which include guide plates (5) swivellable around axes substantially directed perpendicularly to the direction of conveying of the material, as well as substantially straight-lined flow guiding delimiters (4) rigidly mounted on the sieving body (2), characterized in that the guide plates (5), seen in the conveying direction of the material, are mounted spaced from the lateral delimitation as well as parallel to one another with a space between them, and can be moved to parallel swivelling positions depending upon the lateral inclination to the horizontal of the sieving and conveying device (1), swivellable guide plates (5) mounted at least in the central region of the conveying platform (3) extending in their starting position as far as an associated flow guiding delimiter (4).

2. Sieving and conveying device according to claim 1, characterized in that swivellable guide plates (5) are secured with a space in height relative to the conveying platform (3).

3. Sieving and conveying device according to claim 1 or 2, characterized in that flow guiding delimiters (4) and/or guide plates (5) mounted outside the longitudinal central region of the sieving box are designed to be shorter relative to the positional distance between them.

4. Sieving and conveying device according to one of claims 1 to 3, characterized in that the swivellable guide plates (5) are mounted in the material dispensing region of the conveying platform (3).

5. Sieving and conveying device according to one of claims 1 to 4, characterized in that the swivellable guide plates (5) are directed in their starting positions parallel to flow guides mounted upstream and/or downstream.

6. Sieving and conveying device according to claim 5, characterized in that the swivellable guide plates (5) extend in their starting position coaxially with flow guides mounted upstream and/or downstream.

7. Sieving and conveying device according to one of claims 1 to 6, characterized in that the guide plates (5) mounted side by side have at least a length such that in their respective swivelling end positions they extend from one lateral delimitation of the device (1) to the opposite lateral delimitation.

8. Sieving and conveying device according to one of claims 1 to 7, characterized in that the swivellable guide plates (5) respectively have a swivelling axis (6) which intersects off centre the longitudinal central axis of the guide plate with offset in the direction of conveying of the material.

9. Sieving and conveying device according to one of claims 1 to 8, characterized in that in the direction of conveying of the material groups of swivellable guide plates (5) arranged alongside one another are provided.

10. Sieving and conveying device according to one of claims 1 to 9, characterized in that the guide plates (5) mounted alongside one another are mechanically coupled and can be moved over into their swivelling positions by means of a common adjusting member (20, 26, 31, 32).

11. Sieving and conveying device according to one of claims 1 to 10, characterized in that the guide plates (5) are swivellable by means of a hydraulically actuatable setting member (20, 26).

12. Sieving and conveying device according to one of claims 10 or 11, characterized in that the setting member is actuatable by means of a control unit (11) comprising a pendulum (20) and/or sensors (8).

13. Sieving and conveying device according to one of claims 1 to 12, characterized in that the direction of swivelling of the sieving body (2) is modifiable depending on the lateral inclination of the sieving and conveying device (1) by means of a swivelling body associated with a hydraulic control unit (11) held on a supporting frame (9, 10), movable by means of a control cylinder (12), and in that a hydraulic cylinder (20) engages on the swivelling body as a control element for the actuation of the guide plates (5).

14. Sieving and conveying device according to one of claims 1 to 13, characterized in that the frame and bearing members (30) provided for the swivelling of the guide plates (5) are mounted screened relative to the material to be sieved and conveyed.

15. Sieving and conveying device according to claim 14, characterized in that the frame and bearing members (30) provided for the swivelling of the guide plates (5) are mounted under the conveying platform.

16. Sieving and conveying device according to one of claims 1 to 15, characterized in that deflector elements guiding the material towards the centre of the flow guiding system can be provided with a space between them on the oppositely-disposed inner walls of the flow guiding delimiters (4).

**Revendications**

1. Dispositif de criblage et d'acheminement pour une moissonneuse-batteuse, de préférence automotrice, comprenant un fond d'acheminement (3), un équipage de criblage (2) mobile en va-et-vient qui suit le fond vers l'aval, ainsi que des moyens de guidage associés à l'équipage de criblage (2) et/ou au fond d'acheminement (3) pour uniformiser la répartition de la matière à cribler en cas de battage en pente, qui comprennent des plaques déflectrices (5) pouvant pivoter autour d'axes orientés en substance perpendiculairement par rapport à la direction d'acheminement de la matière et des éléments de délimitation de chenaux de guidage essentiellement rectilignes (4) montés fixes sur l'équipage de criblage (2), caractérisé en ce que les plaques déflectrices (5), dans la direction d'acheminement de la matière, sont installées parallèlement l'une à côté de l'autre et espacées des éléments de délimitation latéraux et peuvent être amenées dans des positions de pivotement parallèles en fonction de l'inclinaison latérale du dispositif de criblage et d'acheminement (1) par rapport à l'horizontale, étant entendu qu'au moins les plaques déflectrices (5) montées à pivotement dans la zone centrale du fond d'acheminement (3) s'étendent, dans leurs positions de départ, jusqu'à un élément de délimitation de chenal de guidage (4) associé.

2. Dispositif de criblage et d'acheminement suivant la revendication 1, caractérisé en ce que les plaques déflectrices pivotantes (5) sont fixées à une certaine distance en hauteur par rapport au fond d'acheminement (3).

3. Dispositif de criblage et d'acheminement suivant la revendication 1 ou 2, caractérisé en ce que les éléments de délimitation de chenaux de guidage (4) et/ou les plaques déflectrices (5) installés à l'extérieur de la zone centrale médiane longitudinale du caisson de criblage sont d'une configuration plus courte compte tenu de leur espacement mutuel.

4. Dispositif de criblage et d'acheminement suivant l'une quelconque des revendications 1 à 3, caractérisé en ce que les plaques déflectrices pivotantes (5) sont prévues dans la zone d'alimentation de matière du fond d'acheminement (3).

5. Dispositif de criblage et d'acheminement suivant l'une quelconque des revendications 1 à 4, caractérisé en ce que, dans leurs positions de départ, les plaques déflectrices pivotantes (5) sont orientées parallèlement à des éléments de délimitation de chenaux de guidage installés en amont et/ou en aval.

6. Dispositif de criblage et d'acheminement suivant la revendication 5, caractérisé en ce que les plaques déflectrices pivotantes (5) s'étendent, dans leurs positions de départ, coaxialement à des éléments de délimitation de chenaux de guidage installés en amont et/ou en aval.

7. Dispositif de criblage et d'acheminement suivant l'une quelconque des revendications 1 à 6, caractérisé en ce que les plaques déflectrices (5) disposées l'une à côté de l'autre ont au moins une longueur telle que, dans chacune de leurs positions de pivotement extrêmes, elles s'étendent depuis un élément de délimitation latéral du dispositif (1) jusqu'à l'élément de délimitation latéral opposé.

8. Dispositif de criblage et d'acheminement suivant l'une quelconque des revendications 1 à 7, caractérisé en ce que les plaques déflectrices pivotantes (5) ont chacune un axe de pivotement (6) qui coupe l'axe médian longitudinal de la plaque déflectrice en un endroit excentré par un décalage dans la direction d'acheminement de la matière.

9. Dispositif de criblage et d'acheminement suivant l'une quelconque des revendications 1 à 8, caractérisé en ce que, dans la direction d'acheminement de la matière sont prévus des groupes de plaques déflectrices pivotantes (5) disposées l'une à côté de l'autre.

10. Dispositif de criblage et d'acheminement suivant l'une quelconque des revendications 1 à 9, caractérisé en ce que les plaques déflectrices (5) disposées l'une à côté de l'autre sont accouplées mécaniquement et peuvent être amenées dans leurs positions de pivotement au moyen d'un élément positionneur commun (20, 26, 31, 32).

11. Dispositif de criblage et d'acheminement suivant l'une quelconque des revendications 1 à 10, caractérisé en ce que les plaques déflectrices (5) peuvent pivoter à l'intervention d'un élément positionneur (20, 26) pouvant être actionné hydrauliquement.

12. Dispositif de criblage et d'acheminement suivant l'une des revendications 10 ou 11, caractérisé en ce que l'élément positionneur peut être actionné au moyen d'une unité de commande (11) comprenant un pendule (20) et/ou des capteurs (8).

13. Dispositif de criblage et d'acheminement suivant l'une quelconque des revendications 1 à 12, caractérisé en ce que la direction d'oscillation de l'équipage de criblage (3) peut être modifiée en fonction de l'inclinaison latérale du dispositif de criblage et d'acheminement (1) par l'intermédiaire d'une unité de commande hydraulique (11) comportant un support pivotant suspendu à un bâti de support (9, 10) et pouvant être déplacé par un vérin de commande (12), un vérin hydraulique (20) servant d'élément positionneur pour l'actionnement des plaques déflectrices (5) agissant sur le support pivotant.

14. Dispositif de criblage et d'acheminement suivant l'une quelconque des revendications 1 à 13, caractérisé en ce que la timonerie et les paliers (30) prévus pour le pivotement des plaques déflectrices (5) sont protégés contre la matière criblée et acheminée.

15. Dispositif de criblage et d'acheminement suivant la revendication 14, caractérisé en ce que la timonerie et les paliers (30) prévus pour le pivotement des plaques déflectrices (5) sont installés en dessous du fond d'acheminement.

16. Dispositif de criblage et d'acheminement suivant l'une quelconque des revendications 1 à 15, caractérisé en ce qu'au niveau des parois intérieures opposées des éléments de délimitation de chenaux de guidage (4) peuvent être prévus des déflecteurs espacés les uns des autres dans la direction d'acheminement de la matière et repoussant la matière vers le milieu du chenal de guidage.

EP 0 323 833 B1

Fig. 1

Fig. 2

Fig. 3

Fig. 4

Fig. 5

Fig. 6

Fig. 7

EP 0 323 833 B1

Fig. 8

Fig. 9

EP 0 323 833 B1